# EUROPÄISCHE PATENTSCHRIFT

(11) **EP 2 997 614 B1**
(45) Veröffentlichungstag und Bekanntmachung des Hinweises auf die Patenterteilung: **11.04.2018**
(21) Anmeldenummer: 14731139.3
(22) Anmeldetag: 02.05.2014
(51) Int. Cl.: H01M 4/50, H01M 4/52, H01M 4/48, H01M 4/38, H01M 12/08

(54) **ELEKTROCHEMISCHES SPEICHERMATERIAL UND ELEKTROCHEMISCHE SPEICHEREINRICHTUNG ZUR SPEICHERUNG ELEKTRISCHER ENERGIE, UMFASSEND EIN SOLCHES SPEICHERMATERIAL**
ELECTROCHEMICAL STORAGE MATERIAL AND ELECTROCHEMICAL STORAGE DEVICE FOR STORING ELECTRICAL ENERGY, COMPRISING SUCH STORAGE MATERIAL
MATÉRIAU ACCUMULATEUR ÉLECTROCHIMIQUE ET DISPOSITIF ACCUMULATEUR ÉLECTROCHIMIQUE DESTINÉ À L'ACCUMULATION D'ÉNERGIE ÉLECTRIQUE ET POURVU D'UN TEL MATÉRIAU ACCUMULATEUR

(30) Priorität: 18.05.2013 DE 102013008659
(43) Veröffentlichungstag der Anmeldung: 23.03.2016
(73) Patentinhaber: Forschungszentrum Jülich GmbH, 52425 Jülich (DE)
(72) Erfinder: HOSPACH, Andreas, 83043 bad Aibling (DE); MENZLER, Norbert H., 52428 Jülich (DE); BRAM, Martin, 52428 Jülich (DE); BUCHKREMER, Hans Peter, 52525 Heinsberg-Schafhausen (DE); NIEWOLAK, Leszek, 52428 Jülich (DE); QUADAKKERS, Willem J., NL-6363 EG Wijnandsrade (NL); ZUREK, Joanna, 52428 Jülich (DE)
(86) Internationale Anmeldenummer: PCT/DE2014/000232
(87) Internationale Veröffentlichungsnummer: WO 2014/187440

(56) Entgegenhaltungen:
- WO-A1-2013/045208
- WO-A1-2013/045223
- WO-A2-2012/146465
- DE-A1-102011 083 410
- XUAN ZHAO ET AL: "Performance of Solid Oxide Iron-Air Battery Operated at 550°C", JOURNAL OF THE ELECTROCHEMICAL SOCIETY, Bd. 160, Nr. 8, 25. März 2013 (2013-03-25) , Seiten A1241-A1247, XP055065462, DOI: 10.1149/2.085308jes]

## Beschreibung

Die Erfindung betrifft ein Speichermaterial für eine Speichereinrichtung, welches bei Temperaturen zwischen 500 und 1000 °C, insbesondere zwischen 600 und 900 °C, und einem Sauerstoffpartialdruck zwischen 10⁻⁴ und 10⁻³⁰ bar, insbesondere zwischen 10⁻¹² und 10⁻²² bar, langzeitstabil, möglichst viel und/oder schnell elektrische Energie in Form von Sauerstoff aufnehmen und wieder abgeben kann.

Die Erfindung betrifft ferner eine Vorrichtung zur Speicherung (Ladung) und Bereitstellung (Entladung) von elektrischer Energie umfassend das vorgenannte Material, sowie ein Verfahren zur Herstellung eines solchen Materials.

### Stand der Technik

Viele der heutigen Anwendungen, stationär oder mobil, werden mit Strom betrieben. Sofern nicht eine dauerhafte Stromquelle in Form des Stromnetzes oder eines Generators vorhanden ist, muss zum Betreiben dieser Geräte auf Energiespeicher zum Speichern von elektrischer Energie zurückgegriffen werden. Besonders effektiv sind dabei wiederaufladbare Speicher für elektrische Energie auf elektrochemischer Basis, also solche die sowohl elektrische Energie speichern als auch bei Bedarf wieder abgeben können. Ein solcher Speicher ist damit eine Ausführungsform einer galvanischen Zelle, und wird auch Akku bzw. Akkumulator genannt. Eine besondere Art eines elektrochemischen Energiespeichergerätes ist die sogenannte Hochtemperatur-Metall/Metalloxid-Speichereinrichtung.

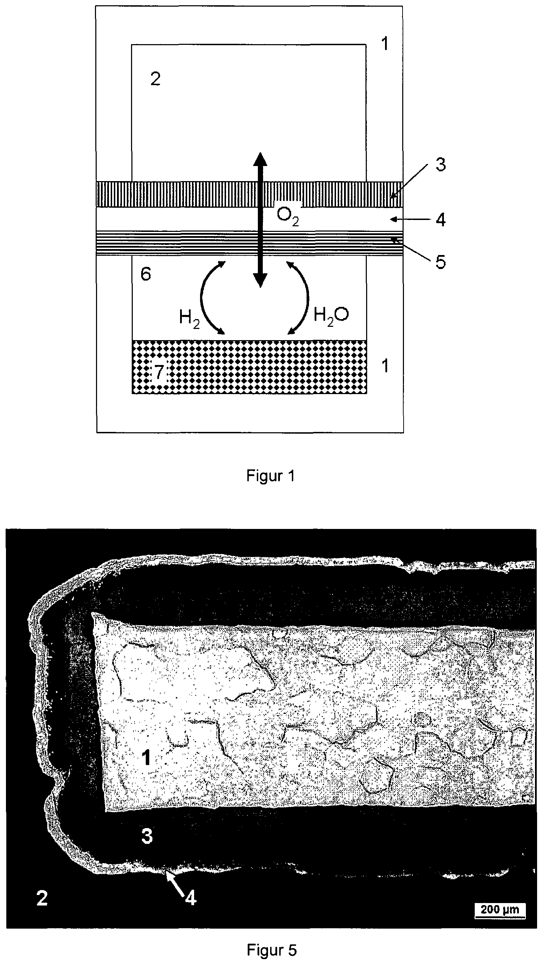

Eine solche Hochtemperatur-Metall/Metalloxid-Speichereinrichtung besteht aus wenigstens einem Modul, mit zwei Elektroden sowie einem dazwischen angeordneten Sauerstoff leitenden Elektrolyten, wie es in Figur 1 schematisch dargestellt ist. Dabei bedeuten die Legendenzeichen in der Figur 1:
1) Gehäuse bzw. Interkonnektoren.
2) Luftraum, in dem sich ein sauerstoffreiches Gas (z. B. Luft) befindet.
3) Luftelektrode.
4) Sauerstoffionen leitender Elektrolyt.
5) Brennstoffelektrode.
6) Brennstoffraum, in dem sich das sogenannte Shuttlegas (z. B. H₂ + H₂O) befindet.
7) Elektrochemisches Speichematerial.

Die Bauteile Luftelektrode (3), Elektrolyt (4) und Brennstoffelektrode (5) bilden dabei die elektrochemische Zelle. Die elektrochemische Zelle kann in zwei verschiedenen Betriebsmodi betrieben werden.

Während der Entladung der Speichereinrichtung nutzt die elektrochemische Zelle den im Brennstoffraum vorhandenen Wasserstoff und den im Luftraum vorhandenen Sauerstoff zur Energieerzeugung, ähnlich wie bei einer Brennstoffzelle. Dabei entsteht im Brennstoffraum als Beiprodukt Wasser, welches mit dem elektrochemischen Speichermaterial (7) reagiert. Während dieser Reaktion wird der Sauerstoff aus dem Wasser chemisch durch Oxidation im Speichermaterial gebunden und Wasserstoff freigesetzt. Der freigesetzte Wasserstoff dient weiter als Brennstoff zu Energieerzeugung. Die vorgenannte Reaktion läuft solange ab, bis das Speichermaterial vollständig umgewandelt bzw. oxidiert ist.

Während der Ladung der Speichereinrichtung wird das im Brennraum der elektrochemischen Zelle vorhandene Wasser mit Hilfe des elektrischen Stroms zersetzt. Der Sauerstoff aus dem Wasser wird in Form von Sauerstoffionen durch den Elektrolyten der Zelle in den Luftraum abtransportiert und dort unter Abgabe von Elektronen als Gas freigesetzt. Auf der anderen Seite reagiert der Wasserstoff aus dem Wasser unter Aufnahme von Elektronen zu Wasserstoff, der in das Speichermaterial migriert und dort eine Reduktion des vorliegenden Oxids bewirkt. Unter Aufnahme des Sauerstoffs aus dem Speichermaterial entsteht als Produkt des Reduktionsprozesses Wasser, welches zurück in den Brennstoffraum wandert.

Das H₂/H₂O-Gasgemisch im Brennstoffraum dient somit als Sauerstoffüberträger (Shuttle) und ermöglicht den Sauerstofftransport zwischen der Zelle und dem Speichermaterial. Es ist auch möglich anstelle von H₂/H₂O ein Gemisch aus CO/CO₂ als Shuttlegas einzusetzen.

Aus der Literatur sind bereits einige Materialien zur elektrochemischen Speicherung von Energie in Form von Sauerstoff bekannt, insbesondere werden dazu die so genannten Metall-/Metalloxid-Materialien als Energiespeicher verwendet. Darin werden beispielsweise Mangan, Eisen oder Nickel, bzw. deren Legierungen, als Speichermaterialien genannt, die in reduzierter Form als Metall und in oxidierter Form als Metalloxide vorliegen.

Mit diesen Speichermaterialien kann überschüssige elektrische Energie (z. B. aus Wind- oder Sonnenenergie) zur Reduktion des Metalloxides (z. B. Fe₂O₃/Fe₃O₄/FeO oder NiO) genutzt werden. Der Speicher wird dabei aufgeladen. Bei Bedarf kann das reduzierte Speichermaterial oxidiert werden, wodurch elektrische Energie wieder frei wird. Der Speicher wird entladen.
Es hat sich jedoch herausgestellt, dass diese als Speichermaterialien bekannten Metall-/Metalloxid-Materialien (z. B. Eisen/Eisenoxid, Mangan/Manganoxid oder Nickel/Nickeloxid) in der bislang vorliegenden Form nicht ausreichend langzeitstabil sind. Das bedeutet, dass das Speichermaterial nach einer Vielzahl von Entlade- und Ladezyklen seine Fähigkeit Energie aufzunehmen und abzugeben verliert bzw. diese stark vermindert wird (Degradation). Es hat sich herausgestellt, dass dies in der unzulänglichen Materialstabilität begründet ist.

Bei Oxid-basierten Speichermaterialen führen die Entlade- und Ladezyklen bei den bekannten Metall-/Metalloxid-Materialien regelmäßig zu einer Trennung und Vergröberung des Speichermaterials. Als Folge der vorgenannten beiden Prozesse bildet sich auf der Speichermaterialoberfläche eine Schicht aus, die aus einem reaktiven Oxid besteht. Während des Reduktionsprozesses (Batterie Aufladung) wandelt sich die Oxidschicht nach und nach in eine gasdichte Metallschicht um. Die Entstehung einer solchen gasdichten Metallschicht verringert bzw. behindert jedoch nachteilig den Gasaustausch des Speichermaterials mit der Atmosphäre und verhindert dadurch den weiteren Ladevorgang. Die drei Prozesse - Trennung, Vergröberung und Ausbildung der gasdichten metallischen Oberflächenschicht - sind verantwortlich für die Eigenschaft bisheriger Speichermaterialien nach und nach an Effektivität zu verlieren.

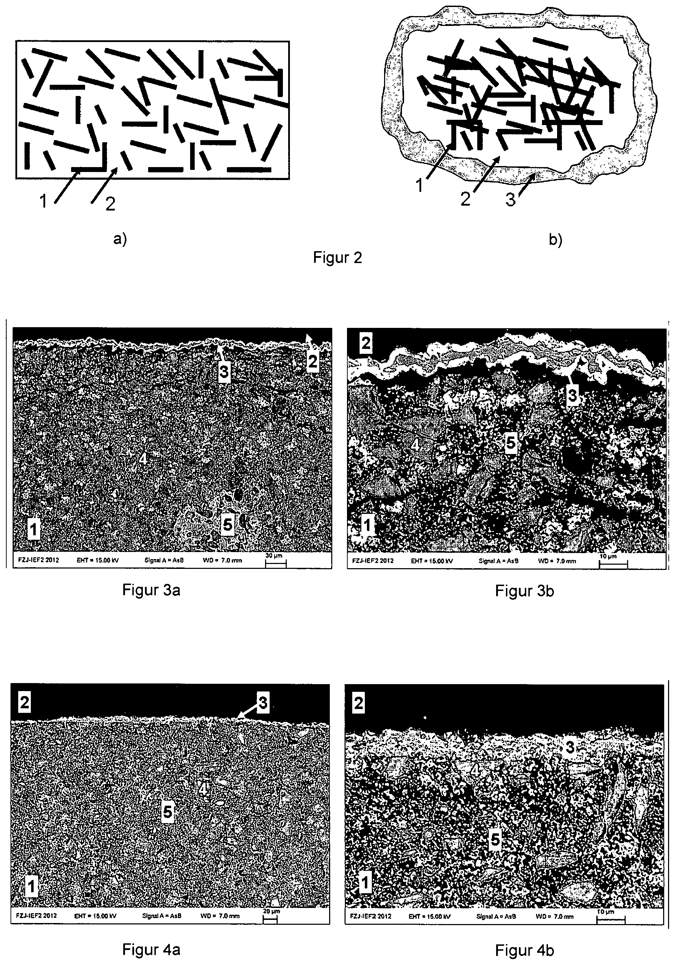

Die vorgenannten Prozesse sind der Grund für die nachteilige Agglomerierung, die wiederum zu einer verringerten aktiven Oberfläche führt (siehe Figur 2). In der schematischen Darstellung des Speichermaterials in Figur 2 bedeuten 1 = inertes Oxid; 2 = reaktives Oxid; 3 = Oberflächendeckschicht aus Oxid oder Metall. Auf der linken Seite (Figur 2a) ist der Ausgangszustand des Speichermaterials dargestellt, bei dem das inerte Oxid nahezu gleich verteilt in dem reaktiven Oxid vorliegt. Auf der rechten Seite (Figur 2b) ist der Zustand nach mehreren Lade- bzw. Entladezyklen dargestellt. Das inerte Oxid ist dabei agglomeriert und auf der Oberfläche hat sich eine Deckschicht aus Oxid und Metall ausgebildet, die die weiteren Lade- bzw. Entladezyklen behindert.

In der Vergangenheit wurde versucht, diese als nachteilig empfundene Reaktion der bekannten Metall-/Metalloxid-Materialien zu unterbinden. Dazu wurde beispielsweise versucht, mit unterschiedlichen Zugaben von chemisch inerten Oxiden die Agglomeration bzw. Vergröberung des Materials zu verhindern. Als chemisch inertes Oxid wurde zum Beispiel mit Yttrium dotiertes Zirkoniumdioxid als Ionenleiter bzw. Stützmatrix verwendet. Oxide wie Ceroxid oder Titandioxid wurden in geringen Mengen als keramische Verstärkungsphase zur Materialbildung eingesetzt, die zu so genannten ODS-Materialien (ODS = oxide dispersion strengthened) führen sollten. Es zeigte sich, dass eine Agglomeration bzw. Vergröberung des Materials auf Kosten der Leistungsdichte aufgrund der längeren Diffusionswege verlangsamt, aber nicht verhindert werden konnte.

Die prinzipielle Funktionsweise einer Speichereinrichtung zur Speicherung bzw. Abgabe von chemisch gespeicherter elektrischer Energie wird an zwei unterschiedlichen Beispielen des bekannten Metall/Metalloxid(Me/MeOₓ)-Speichers, insbesondere eines Fe/(Mg,Fe)O-Speichers, der mit Sauerstoff, d. h. beispielsweise mit einer H₂O/H₂- oder CO₂/CO-Gasmischung betrieben wird.

In den Figuren 3a und 3b ist - in unterschiedlichen Maßstäben - jeweils die Mikrostruktur des Speichermaterials Fe/(Mg,Fe)O mit einem inerten Oxid (ZrO₂) nach 10 Zyklen dargestellt, wobei der letzte Zyklus ein Aufladezyklus war.

Demgegenüber zeigen die Figuren 4a und 4b - wiederum in unterschiedlichen Maßstäben - jeweils die Mikrostruktur desselben Speichermaterials mit demselben inerten Oxid nach 11 Zyklen, wobei nunmehr der letzte Zyklus ein Entladezyklus war.

In den Figuren 3 und 4 bedeuten dabei jeweils 1 = Speichermaterial, 2 = Einbettmasse (schwarz), Hilfsmaterial zur Präparation der Schliffproben, d. h. im Batteriebetrieb nicht vorhanden, 3 = Oxid- bzw. Metallschicht (hellgrau), 4 = inertes Oxid (dunkel grau) und 5 = Fe-Oxid, bzw. Fe.

Im Fall von Speichermaterialien, die auf einer Metall-Legierung basieren, tritt zusätzlich der Effekt auf, dass sich während des Ladezyklus nachteilig eine geschossene Metallschicht ausbildet, die nach kürzerer Zeit den Ladervorgang verhindert (siehe Figur 5).

In der Figur 5 bedeuten jeweils 1 = Speichermaterial (Metall), 2 = Einbettmasse (schwarz), 3 = Oxidschicht und 4 = geschlossene Metallschicht.

Des Weiteren wurde eine Erhöhung der Porosität, durch Zugabe von Porenbildner wie Polymere, Graphit oder Stärke, untersucht, die zwar ebenso die Agglomeration/Vergröberung und die Ausbildung der äußeren Schicht verzögern, nicht aber verhindern konnte.

Auch die Bildung von chemisch stabilen Mischoxiden, wie z. B. Chrom-Eisen-Spinellen, führte hinsichtlich der Vermeidung von Strukturvergröberung bei gleichzeitiger Beibehaltung der Reversibilität, nicht zum Ziel. Dies unter anderem deshalb, weil die sich thermodynamisch bildenden Mischoxide im gewählten Reduktions-Sauerstoffpartialdruckbereich nicht mehr reduzierbar sind bzw. die Reduktionskinetik stark verlangsamt wird.

In WO 2012/146465 A2 wird ein Speichermaterial zur Speicherung von elektrischer Energie durch Reduktion oder Oxidation einer Aktivkomponente beschrieben, bei dem ein Metall als Aktivkomponente eingesetzt wird, welches in seiner reduzierten Form als Metallmatrix und in der oxidierten Form als Metalloxid vorliegt. Das Speichermaterial umfasst neben dem Metall/Metalloxid als Aktivkomponente auch einen keramischen Anteil und liegt somit als ein Metallkeramikverbund vor. Optional kann dieser Metallkeramikverbund mit weiteren keramischen Stützpartikeln vermischt werden. Die Aktivkomponente wird dabei durch den keramischen Anteil zu einer ODS (oxide dispersion strengthened) verstärkt.

### Aufgabe und Lösung

Aufgabe der Erfindung ist es, eine Hochtemperatur-Speichereinrichtung zur Verfügung zu stellen, welche langzeitstabil bei Temperaturen zwischen 500 und 1000 °C, insbesondere zwischen 600 und 800 °C, und einem Sauerstoffpartialdruck zwischen 10⁻⁴ und 10⁻³⁰ bar, insbesondere zwischen 10⁻¹² und 10⁻²² bar, möglichst viel und/oder schnell elektrische Energie in Form von chemisch verbundenem Sauerstoff aufnehmen und wieder abgeben kann. Möglichst viel bedeutet dabei, dass optimalerweise das gesamte Speichermaterial auch zur Energiespeicherung beiträgt. Möglichst schnell bedeutet in diesem Zusammenhang einige Minuten bis wenige Stunden.

Ferner ist es die Aufgabe der Erfindung, ein geeignetes Material als elektrochemisches Speichermaterial für die vorgenannte Hochtemperatur-Speichereinrichtung zur Verfügung zu stellen, welches langzeitstabil ist, und auch nach einer Vielzahl (mehr als 1000) von Entlade- und Ladezyklen kaum Speicherverluste aufweist.

Unter Langzeitstabilität versteht man die Beibehaltung von spezifischen physikalischen und chemischen Eigenschaften, wie z. B. Mikrostruktur (Form-, Größe- und Körnerverteilung von Phasen und Poren), die Fähigkeit bzw. die Kinetik der Sauerstoffab- und -aufnahme etc.. Als Langzeitstabil wird im Rahmen dieser Erfindung ein Speichermaterial angesehen, welches einen Speicherverlust von weniger als 10 % nach mehr als 10.000 Redoxzyklen aufweist.

Die Aufgaben der Erfindung werden gelöst durch ein Speichermaterial gemäß Hauptanspruch und einer Speichereinrichtung umfassend das Speichermaterial gemäß Nebenanspruch. Vorteilhafte Ausgestaltungen des Speichermaterials und der Speichereinrichtung finden sich in den jeweils abhängigen Ansprüchen wieder.

### Gegenstand der Erfindung

Es hat sich im Rahmen der Erfindung herausgestellt, dass eine Vergröberung bzw. dauerhafte Trennung des **Speichermaterials,** wie schematisch in der Figur 2 dargestellt, dadurch verhindert werden kann, dass die Aktivkomponente des Speichermaterials während des Lade- bzw. des Entladevorgangs in einer reaktiven Gerüststruktur des Speichermaterials vollständig oder zum Großteil darin aufgenommen werden kann. Die reaktive Gerüststruktur und die sie umfassende Aktivkomponente werden im Folgenden zusammen als erfindungsgemäßes Speichermaterial bezeichnet.

Das erfindungsgemäße Speichermaterial für eine Hochtemperatur-Speichervorrichtung umfasst somit neben einer Aktivkomponente auch eine reaktive Gerüststruktur, die zumindest eine Form der Aktivkomponente, d. h. in seiner oxidierten oder reduzierten Form, aufzunehmen vermag.

Im Rahmen dieser Erfindung wird unter einer Aktivkomponente ein Redoxpaar verstanden, das bedeutet ein Material, welches in einer oxidierbaren und einer reduzierbaren Form vorliegen kann, und welches möglichst viel und/oder schnell elektrische Energie in Form von Sauerstoff aufnehmen und wieder abgeben kann.

Das Redoxpaar kann neben einem Metall und einem Metalloxid auch beispielsweise andere Metalloxide mit unterschiedlichen Oxidationsstufen oder auch ein nichtmetallisches Oxidationsedukt umfassen. Das Aktivmaterial in Form dieses Redoxpaares wird im Folgenden vereinfacht auch mit (Me/MeOₓ) gekennzeichnet. Die Reaktionen des Redoxpaares sind: Me + O₂ bzw. Me + H₂O ←→ MeO + H₂.

Bevorzugt liegt das oxidierbare und reduzierbare Material (Redoxpaar) in Form eines Metalls bzw. eines Metalloxids vor. Insbesondere umfasst die Aktivkomponente dabei Eisen, Kupfer, Mangan, Kobalt, Nickel, Zinn, Molybdän, oder Wolfram, bzw. eine Legierung aus diesen Metallen. Auch Antimon kann als Aktivmaterial eingesetzt werden, allerdings aufgrund seiner geringen Schmelztemperatur nur eingeschränkt, d. h. beispielsweise bei Temperaturen unterhalb von 600 °C.

Unter einer reaktiven Gerüststruktur ist im Rahmen der Erfindung eine Matrix mit möglichst großer spezifischer Oberfläche zu verstehen, die wenigstens ein Oxid oder ein Metall als Gerüstelement umfasst und im Folgenden als oxidische oder metallische Gerüststruktur bezeichnet wird. Im Unterschied zu den bislang bekannten Matrizes weist das erfindungsgemäße Speichermaterial nunmehr eine reaktive Gerüststruktur auf. Als reaktiv wird die Eigenschaft der Gerüststruktur verstanden, dass wenigstens eine Form der reduziert oder oxidiert vorliegenden Aktivkomponente aufgelöst oder chemisch in das Gerüst mit eingebunden werden kann.

Diese Einbindung kann insbesondere bei einer oxidischen Gerüststruktur in der Ausbildung wenigstens eines stabilen Mischoxids aus Aktivkomponente und einem Oxid aus der Gerüststruktur erfolgen. Bei der metallischen Gerüststruktur erfolgt die Einbindung durch Ausbildung einer Legierung aus Aktivkomponenten und wenigstens einem Metall der Gerüststruktur.

Diese Einbindung unterscheidet das erfindungsgemäße Speichermaterial von den bislang bekannten, bei denen die Aktivkomponente entweder nur adsorptiv an eine Matrix gebunden vorliegt, die selbst chemisch inert gegenüber den Aktivkomponenten auftritt, oder bei denen der Aktivkomponente ein chemisch inertes Oxid zugegeben wird, wie beispielsweise mit Yttrium stabilisiertes Zirkoniumdioxid, YSZ, oder durch Zugabe von geringen Mengen an Oxiden, wie beispielsweise Ceroxid oder Titandioxid, wodurch ein ODS-Material mit der Aktivkomponente erzeugt wird. Dabei können bestimmte oxidische Matrizes jedoch auch nachteilig zu einer derart starken Mischoxidbildung mit der Aktivkomponente führen, dass die für die Funktionsweise der Aktivkomponente ausreichende Reversibilität nicht mehr gegeben ist. Dies ist beispielsweise bei einem Chrom-Eisen-Spinell der Fall.

Das erfindungsgemäße Speichermaterial weist demgegenüber eine reaktive Gerüststruktur auf, die entweder aus einem reaktiven Gerüstoxid oder einem reaktiven Gerüstmetall (Legierung) bestehen kann.

Der Begriff reaktiv bedeutet in diesem Zusammenhang, dass das Material des Gerüsts nicht nur als inertes Stützmaterial dient, welches die Aktivkomponente lediglich umfasst, sondern dass das Gerüstmaterial aktiv entweder mit einer oxidierten Form der Aktivkomponente (z. B. einem Metalloxid) oder einer reduzierten Form der Aktivkomponente (z. B. einem Metall) reagiert. Damit ist gemeint, dass während des Lade- oder Entladevorgangs das reaktive Gerüstmaterial ein Reaktionsprodukt (Metall oder Oxid) in sich löst und/oder eine chemische Verbindung mit diesem eingeht.

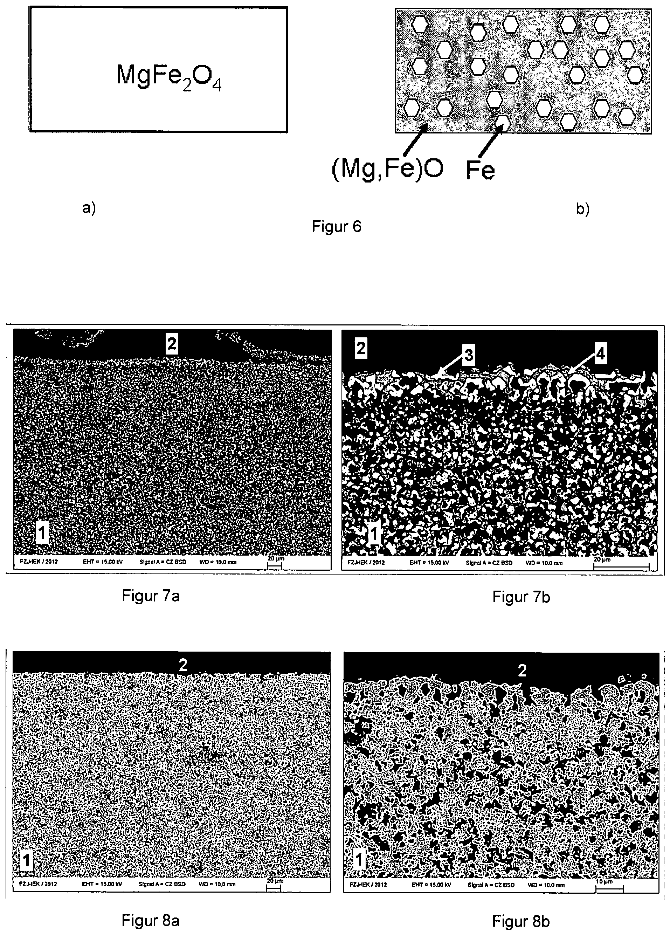

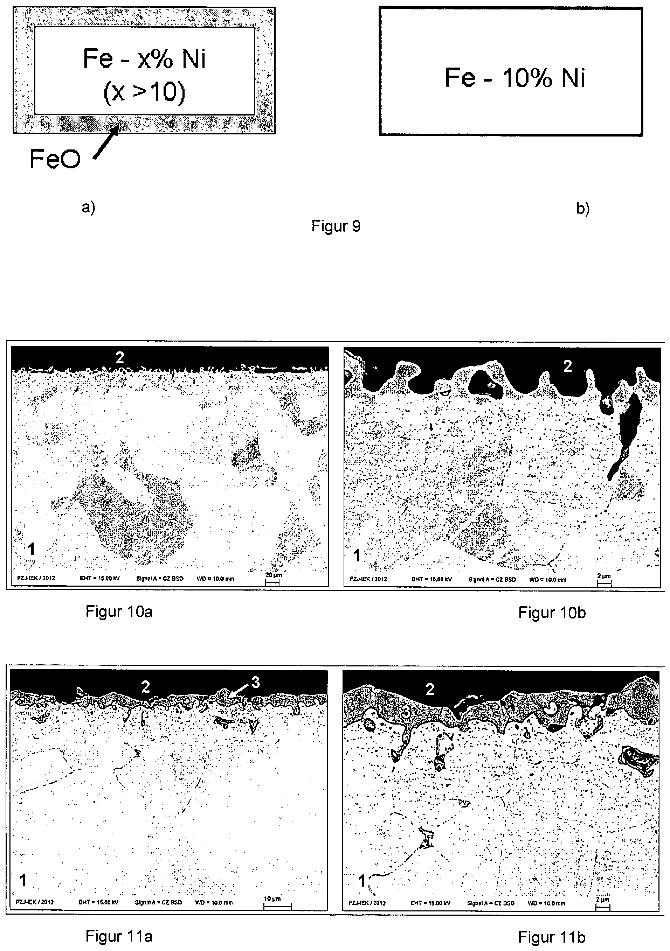

Im Folgenden wird das Prinzip des erfindungsgemäßen Speichermaterials anhand der Figuren 6 und 9 zunächst schematisiert dargestellt. Dabei zeigen die Figuren 6a und 6b eine Ausführungsform des erfindungsgemäßen Speichermaterials mit einem oxidischen Gerüstmaterial, während in den Figuren 9a und 9b die Ausführungsform mit einem metallischen Gerüstmaterial dargestellt ist. Jeweils auf den linken Seiten (a) ist die Aktivkomponente (hier Fe) in ihrer reduzierten Form (geladener Zustand) dargestellt, während sie auf der rechten Seite (b) in ihrer oxidierten Form als Oxid (entladener Zustand) vorliegt.

Beim oxidischen Gerüstmaterial (Figur 6) wird die Aktivkomponente in ihrer oxidierten Form als Mischoxid in die reaktive Gerüststruktur eingebunden, während beim metallischen Gerüstmaterial die reduzierte Form der Aktivkomponente, das Metall, als Legierung in die reaktive Gerüststruktur eingebunden wird.

Erfindungsgemäß liegen die Gerüststrukturen unter den vorgegebenen Betriebsbedingungen (Temperatur und Sauerstoffpartialdruck) reaktiv vor, so dass das Gerüst die Aktivkomponente entweder in Form einer Legierung beim Laden des Speichers (reduzierende Bedingungen) oder in Form eines Mischoxids beim Entladen des Speichers aufnehmen kann.

Die unterschiedlichen Materialien der Gerüststruktur weisen diese "Reaktivität" jedoch in der Regel nicht in jedem Fall, sondern häufig nur bei definierten Betriebsbedingungen auf. Das bedeutet, dass entweder abhängig von den vorgegebenen Betriebsbedingungen (Temperatur und O₂-Partialdruck) für die Speicherung bzw. Entladung geeignete Gerüstmaterialien ausgewählt werden, oder je nach Gerüstmaterial geeignete Betriebsbedingungen gewählt bzw. eingestellt werden sollten, um die erfindungsgemäße Wirkung einer Materialvergröberung bzw. -trennung des Speichermaterials auf Dauer wirksam zu verhindern.

Bislang haben sich Betriebstemperaturen zwischen 500 und 1000 °C und Sauerstoffpartialdrücke zwischen kleiner 10⁻³⁰ und größer als 10⁻¹⁰, in Ausnahmefällen auch bis zu 10⁻¹, als vorteilhaft herausgestellt. Somit sind die erfindungsgemäßen Speichermaterialien bevorzugt für einen Hochtemperatur-Speichereinrichtung geeignet.

Mit dem erfindungsgemäßen Speichermaterial, bzw. einer dieses Material aufweisenden elektrochemischen Speichereinrichtung kann vorteilhaft überschüssige elektrische Energie gespeichert und zu einem späteren Zeitpunkt wieder verwendet werden und auf Grund seiner Langzeitstabilität dieses auch über sehr viele Lade- und Entladezyklen, insbesondere über mehr als 10.000 Zyklen, ohne dass eine signifikante Verschlechterung der Speicherkapazität auftritt.

Durch die Art der Herstellung der Ausgangsmaterialien kann die Porosität des Speichermaterials in gewissen Grenzen beeinflusst werden. Vorteilhafte offene Porositäten liegen im Bereich zwischen 5 und 50 Vol-%. Eine hohe Porosität ermöglicht einen schnellen Gasaustausch und somit sehr kurze Lade- bzw. Entladezeiten für die Speichereinrichtung. Dies geht in der Regel allerdings zu Lasten der Energiedichte, die auf ein bestimmtes Volumen bezogen ist. Je nach Anforderung an die Speichereinrichtung, hohe Dynamik oder hohe Energiedichte, kann der Fachmann daher eine entsprechende Porosität auswählen, um so die Speichereirichtung vorteilhaft an das Anforderungsprofil anzupassen.

Beim Verfahren zum Betreiben einer solchen erfindungsgemäßen Speichervorrichtung wird als bevorzugtes und gut geeignetes Oxidationsmittel im Luftraum der Speichervorrichtung in der Regel Sauerstoff eingesetzt, nicht zuletzt seiner Verfügbarkeit und seiner Unbedenklichkeit wegen. Insbesondere der Einsatz von Umgebungsluft als Oxidationsmittel ist dafür geeignet.

Für die Herstellung des erfindungsgemäßen Speichermaterials können beliebige Ausgangsmaterialien, z. B. Oxide, Hydroxide, Karbonate, Oxalate, etc. eingesetzt werden, die später während des Herstellungsprozesses einerseits die Aktivkomponente (Redoxpaar) und andererseits das Material der Gerüststruktur bilden. Die Ausgangsmaterialien werden dann in dem zur Bildung der Mischoxide und/oder der oxidischen Mischkristalle nötigen stöchiometrischen Verhältnis gemischt, homogenisiert, gegebenenfalls mit Additiven wie Binder (z. B. Latexemulsionen, Polyvinylalkohol, Ethylcellulose, Polyvinylbutyral, Polyvinylpyrolidon, Polyacrylester), Plastifizierer (z. B. Weichmacher auf Phthalatbasis oder Polyethylenglykol, Wachse) und Porenbildner (z. B. Stärke, Graphit, Polymere) versetzt, und eventuell in Form gebracht werden. Bei der Herstellung können die typischen Standardverfahren wie beispielsweise Extrudieren, Pressen, Foliengießen und andere eingesetzt werden.

Das einzustellende Mischungsverhältnis ist dabei abhängig von den entstehenden reaktiven Mischoxiden. Will man zusätzlich zur Aktivkomponente noch eine weitere Stützkomponente mit einbringen, dann sollte der Stützanteil so gering sein, dass er nicht die Hauptmasse/das Hauptvolumen des Speichers ausmacht, und so groß sein, dass er perkoliert. Wird beispielsweise zu viel an aktiver Komponente (z. B. Fe) zugegeben, kann das Mischoxid oder der Mischkristall nicht das gesamte Fe binden/einbauen, welches dann wiederum zur Vergröberung bzw. Speicherleistungsabnahme führt.

### Spezieller Beschreibungsteil

Nachfolgend werden weitere Merkmale, Eigenschaften und Vorteile der vorliegenden Erfindung aufgeführt und anhand von Ausführungsbeispielen und weiteren Figuren näher erläutert, ohne die Erfindung dadurch in Ihrer Gesamtheit einzuschränken.

Im Rahmen konkreter Ausführungsbeispiele werden erfindungsgemäße Energiespeicher beschrieben, die mit einem erfindungsgemäßen Speichermaterial in Form eines Metalls bzw. eines Metalloxids als Aktivkomponente (Redoxpaar) ausgestattet sind. Es sei an dieser Stelle aber nochmals darauf hingewiesen, dass die Aktivkomponente nicht notwendigerweise nur ein Metall und ein Metalloxid umfassen muss, sondern dass das Redoxpaar beispielsweise auch mehrere Metalloxide mit unterschiedlichen Oxidationsstufen oder auch mehreren Legierungen aufweisen kann.

### A) Erste vorteilhafte Ausführungsform der Erfindung mit einem Speichermaterial umfassend eine Aktivkomponente und eine reaktive, oxidische Gerüststruktur.

### Ausführungsbeispiel:

### Aktivkomponente: Fe-FeO, gerüststrukturbildendes Material: MgO.

Für ein Energiespeichermaterial mit Eisen als Aktivkomponente und Magnesiumoxid als Gerüststruktur bedeutet das beispielsweise ein Mischungsverhältnis von Mg zu Fe von 1:2 (bezogen auf Mol- bzw. Atomprozent), bzw. von 1:1 bei Verwendung der Oxide MgO und Fe₂O₃. Bei diesen Verhältnissen würde sich eine Reihe von Mischoxiden ((Fe,Mg)O - MgFe₂O₄) ausbilden.

Eine geringfügige Unterstöchiometrie an Eisen kann im Vergleich zum reinen Eisenoxid ebenso vorteilhaft sein, wie eine leichte Überstöchiometrie, so dass Abweichungen von dem vorgegebenen Verhältnis von ± 10 % im Rahmen dieser Erfindung noch mit umfasst sein sollen.

Im ersten Fall würde dies allerdings auf Kosten der Energiedichte gehen, d. h. weniger Aktivkomponente bezogen auf die Gesamtmasse der Speichereinrichtung. Im zweiten Fall der Überstöchiometrie kann demgegenüber eine Migration der Aktivkomponente über die Zeit nicht mehr ganz ausgeschlossen werden. Daher würde im vorliegenden Fall mit Eisen als Aktivkomponente und Magnesiumoxid als Gerüststruktur vorteilhaft ein atomares Mischungsverhältnis zwischen 1:1 und 1:3 von Mg zu Fe einzustellen sein.

Das fertiges Speichermaterial umfasst somit (Fe,Mg)O bzw. (Mg,Fe)₂O₄ oder MgFe₂O₄, abhängig von der gewünschten Zusammensetzung und den Herstellungsparametern. Herstellungsrouten:
a) MgO + FeO (bzw. Fe₃O₄, Fe₂O₃) → Mischen → Kalzinieren → (Fe,Mg)O.
b) MgCO₃ + FeCO₃ → Mischen → Kalzinieren → (Fe,Mg)O.
c) MgCl₂ + FeCl₂ → Lösung → Hydrolyse Kalzinieren → (Fe,Mg)O.
d) Mg(C₂O₄) + Fe(C₂O₄) → Mischen → Kalzinieren → (Fe,Mg)O.
e) Mg(C₂O₄) + Fe(C₂O₄) → Lösung → Trocknen → Kalzinieren → (Fe,Mg)O.

Das erfindungsgemäße Speichermaterial umfassend (Fe,Mg)O kann, wie oben beschrieben, hergestellt werden, und, sofern notwendig, durch beliebige Methoden im Anschluss daran konfektioniert werden. Das fertige Speichermaterial kann als Oxidpulver mit einer vorteilhaften Korngröße von weniger als 10 µm bereitgestellt werden. Dies entspricht einer mittleren Korngröße von 0,2 bis 10 µm, vorteilhaft zwischen 0,5 bis 5 µm. Feineres Pulver mit einer mittleren Korngröße von weniger als 0,2 µm führt regelmäßig zu einer geringeren Porosität, während gröberes Pulver mit einer mittleren Korngröße von mehr als 10 µm erfahrungsgemäß zu einer geringeren spezifischen Oberfläche führt.

Das pulverförmige Speichermaterial kann, sofern notwendig, im Anschluss daran mittels verschiedener keramischer Prozesse in die gewünschte Form gebracht werden, (z. B. Folien, Stäbe, Granulat etc.).

Alternativ kann die gewünschte Endform (z. B. Folien, Stäbe, Granulat etc.) auch direkt aus den Ausgangsmaterialien mit oder ohne Additive (wie z. B. Binder, Plastifizierer oder Porenbildner) hergestellt werden, so dass während des Kalzinationsprozesses das fertige Speicherbauteil in einem Schritt hergestellt werden kann. Auch Pulverschüttungen in unterschiedlicher Formgebung sind möglich.

Die Formgebung dient der besseren Handhabbarkeit unter Beibehaltung einer hohen, offenen Gesamtporosität des Speichermaterials und kann beispielsweise durch Pressen, Gießen oder Extrudieren erfolgen. Die vorteilhafte Porosität liegt dabei zwischen 10 und 80 Vol.-%, insbesondere zwischen 20 und 60 Vol.-%. Ebenso kann beispielsweise ein Metallhydrid zum Aufschäumen des Speichermaterials verwendet werden.

Anschließend werden die Rohlinge gesintert um die gewünschte Phase, im vorliegenden Fall MgFe₂O₄, zu bilden und um die nötige Formstabilität, bzw. Mikrostruktur, zu erreichen.

Das Sintern bzw. die Phasenbildung der Mischoxide kann alternativ auch während des "Hochfahrens" des gesamten Speichersystems auf Betriebstemperatur stattfinden. Die Verwendung von Oxiden als Ausgangsmaterial bietet (neben einer Materialkostenersparnis) den Vorteil, dass im Speicher ausreichend Volumen und Porosität vorhanden ist, um die Phasenumwandlungen während des Betriebs unbeschadet zu überstehen und eine ausreichende Gasdurchströmung zu gewährleisten. Auch mögliche Pulverschüttungen des Speichermaterials sind hierbei zu nennen,

### 2. Ausführungsbeispiel:

### Aktivkomponente: Fe-FeO, gerüststrukturbildendes Material: CaO.

Als besonders geeignete Metall-/Metalloxid-Materialien im Falle von Eisen als aktiver Speicherkomponente sind Mischoxide vom Typ MeFe₂O₄ / Me₂Fe₂O₅ / MeFe₃O₅ usw., wobei Me ein zweiwertiges Metall-Ion darstellt, und oxidische Mischkristalle vom Typ (Me,Fe)O mit einer Wüstit Kristallstruktur zu nennen, aber auch reaktive Mischoxide vom Typ MeFe₂O₄/ MeFeO₃ usw., wobei Me ein vierwertiges Metall-Ion ist. Die Mischoxide und oxidischen Mischkristalle können schrittweise reduziert werden, wobei am Ende der Reaktion - je nach Wahl der oxidischen Gerüststruktur - eine metallische Phase entstehen kann oder nur oxidische Phasen vorliegen. Bei der nachfolgenden Oxidation wird die gebildete Phase wieder in die Gerüststruktur eingebaut. Dies verhindert effektiv die Materialtrennung/Migration im Speichermaterial. Eine Beispielreaktion für Me = Ca bei 800 °C lautet wie folgt:

2 CaFe₃O₅ ← *(>pO₂ ∼ 10⁻¹⁹ bar>) →* Ca₂Fe₂O₅ + 4 Fe + 2,5 O₂

Für einen solchen Speicherwerkstoff wäre somit ein Fe-Ca-Atomverhältnis von 3:1 ideal. Sofern man geringe Verluste in der Leistung bzw. in der Verringerung der Lebensdauer in Kauf nehmen würde, könnte das Verhältnis aber auch in dem weiteren Bereich zwischen 5:1 und 1:1 eingestellt werden.

Abhängig vom vorliegenden Sauerstoffpartialdruck, und der Temperatur während des Lade- bzw. Entladebetriebs des Speichermaterials sind beispielsweise folgende weitere Phasenumwandlungen von Interesse:

| | | | |
|---|---|---|---|
| TiFe₂O₅ | → FeTiO₃ + Fe + O₂; | MgFe₂O₄ | → 2(Mg,Fe)O + Fe + O₂; |
| ZnFe₂O₄ | → 2(Zn,Fe)O + Fe + O₂; | 2 CaFe₂O₄ | → Ca₂Fe₂O₅ + 2 Fe + 1, O₂; |
| 2 CaFe₅O₇ | → Ca₂Fe₂O₅ + 8 Fe + 4,5 O₂; | CeFeO₃ | → CeO₂ + Fe + 0,5 O₂; |
| Fe₂SiO₄ | → SiO₂ + 2Fe + O₂; | TiFeO₃ | → TiO₂ + Fe + 0,5 O_{2.} |

Neben Eisen als Aktivkomponente sind auch Cu-, Mn-, Ni-, Co-, Mo- und W-basierte Mischoxide geeignet, sofern sie (bei entsprechenden Redox Bedingungen) reaktive Gerüststrukturen bilden, wie beispielsweise CuFe₂O₄, CoFe₂O₄ oder NiFe₂O₄. Zudem sind auch Mischungen der vorgenannten Komponenten möglich.

Die vorgenannte Tabelle 1 zeigt einige konkrete Beispiele für mögliche Varianten von erfindungsgemäßen Speichematerialien mit einer oxidischen Gerüststruktur, sowie die entsprechenden Bedingungen bezüglich der Temperatur und des Sauerstoffpartialdrucks, bei welchem die Gerüststruktur ihre "reaktive" Eigenschaft aufweist (Stabilitätsbereiche).

| Aktivkomponente | Gerüstelement | Sauerstoffpartialdruckbereich* [lg(p_{O2}[bar])] | | Temperaturbereich [°C] | Oxide zusätzlich zu FeO |
|---|---|---|---|---|---|
| | | von | bis | | |
| Fe | Mg | -21 | -17 | 600 - 1000 | (Mg,Fe)O, (Mg,Fe)₃O₄ |
| Fe | Ca | -20 | -16 | 600 - 1000 | CaO, Ca₂Fe₂O₅ |
| | | | | | CaFe₃O₅,Fe₃O₄ [2] |
| Fe | Sr | -21 | -17 | 600 - 1000 | SrO, (Fe, Sr), Sr₂Fe₂O₅ |
| Fe | Ba | -20 | -17 | 600 - 1000 | BaO, Ba₂Fe₂O₅ |
| | | | | | Ba₃Fe₂O₆ |
| Fe | Ti | | | 600 - 1000 | FeTiO₃,Fe₂TiO₅ |
| Fe | Mn | -20 | -15 | 600 - 1000 | (Fe,Mn)O (Fe,Mn)₃O₄ |
| Fe | Cu | -15 | -10 | 600 - 1000 | CuFe₂O₄, (Fe,Cu)O |
| Fe | Co | -21 | -17 | 600 - 1000 | (Co,Fe)O (Co,Fe)₃O₄ |
| Fe | Ni | -19 | -15 | 600 - 1000 | (Ni,Fe)O |
| Fe | Zn | | | 600 - 1000 | ZnO |
| Fe | Ce | -21 | -17 | 600-1000 | CeO₂,CeFeO₃ |
| Fe | W | -20 | -16 | 500 - 700 | WO₃, WO₂ |
| Fe | Mo | -20 | -16 | 500 - 700 | MoO₃, MoO₂ |

| | | | | | |
|---|---|---|---|---|---|
| *Die aufgelisteten Sauerstoffpartialdruckbereiche beziehen sich auf eine Betriebstemperatur des Speichersystems von ca. 800 °C. Die Werte ändern sich bei Vorliegen einer anderen Temperatur und können für einen davon abweichenden Temperaturbereich leicht aus bekannten Datenbanken für thermodynamische Daten oxidischer Systeme berechnet werden. | | | | | |

Die nachfolgende Tabelle 2 führt die relevanten Sauerstoffpartialdruckbereiche aufgrund des Gleichgewichts H₂/H₂O in den hier verwendeten Mischungsverhältnissen (80/20, 20/80) bei 800 °C auf. Eine analoge Tabelle für das Gleichgewicht CO/CO₂ ließe sich für einen Fachmann mit dem Programm FactSage ebenfalls berechen.

| Verhältnis H₂/H₂O | Ig(p_{O2}) bei 650 °C [bar] | Ig(p_{O2}) bei 800 °C [bar] | Ig(p_{O2}) bei 900 °C [bar] |
|---|---|---|---|
| 90/10 | -24 | -20,3 | -18,1 |
| 80/20 | -23,5 | -19,5 | -17,5 |
| 50/50 | -22 | -18,5 | -16,2 |
| 20/80 | -21 | -17 | -15 |
| 10/90 | -20,2 | -16,5 | -14,3 |

Im Falle einer reaktiven oxidischen Gerüststruktur (z. B. (Mg, Fe)O, wie in den Figuren 7 und 8 dargestellt) kann die Aktivkomponente, z. B. Eisen, bei der Reduktion des Speichers aufgrund der geringen chemischen Stabilität ihrer Oxide (unter den gegebenen Bedingungen von Temperatur und O₂-Partialdruck) die Gerüststruktur verlassen und liegt somit als Metall vor. Die Oxide, die einen niedrigeren Zersetzungsdruck als FeO als Aktivkomponente aufweisen, z. B. MgO, bilden dann die an Fe-verarmte Gerüststruktur. Bei der nächsten Oxidation wird die Aktivkomponente wieder vollständig, bzw. größtenteils, in das entsprechende Oxid umgewandelt und als solches wieder in die Gerüststruktur, in Form eines Mischoxids bzw. Mischkristalls, aufgenommen.

In den Figuren 7 und 8 bedeuten: 1 = Speichermaterial, 2 = Einbettmasse (schwarz), und innerhalb des Speichermaterials 3 = Aktivkomponente Metall (weiß), 4 = oxidische Gerüststruktur (grau) neben Poren (schwarz). Die Figur 7 zeigt die Mikrostruktur des Speichermaterials in unterschiedlichen Maßstäben nach 10 Zyklen, wobei nunmehr der letzte Zyklus ein Ladezyklus war. Deutlich erkennbar ist das reduzierte metallische Eisen als helle Flecken homogen innerhalb der oxidischen Gerüststruktur zu erkennen. In Figur 8, ebenfalls in unterschiedlichen Maßstäben, ist in der Mikrostruktur des Speichermaterials nach 11 Zyklen, wobei nunmehr der letzte Zyklus ein Entladezyklus war, nur noch eine einheitliche poröse Mischoxidphase erkennbar. Die Aktivkomponente ist in ihrer oxidierten Form durch Mischoxidbildung vollständig in dem Gerüstoxid aufgenommen/eingebunden worden

Durch diese Einbindung der Aktivkomponente in die reaktive Gerüststruktur wird eine Vergröberung bzw. dauerhafte Trennung (Migration) der Aktivkomponente auf lange Sicht effektiv verhindert, bzw. zumindest deutlich verlangsamt.

### B) Zweite vorteilhafte Ausführungsform der Erfindung mit einem Speichermaterial umfassend eine Aktivkomponente und eine reaktive, metallische Gerüststruktur.

### 3. Ausführungsbeispiel:

### Aktivkomponente: Fe-FeO, gerüststrukturbildendes Material: Ni.

Im Folgenden wird ein erfindungsgemäßes Speichermaterial mit einer Eisen haltigen Legierung beschrieben, wobei das Eisen die Aktivkomponente darstellt.

Im Falle einer reaktiven metallischen Gerüststruktur (z. B. einer Fe-Ni-Legierung, wie in den Figuren 10 und 11 dargestellt, kann die Aktivkomponente, z. B. Eisen, bei der Oxidation des Speichers aufgrund der höheren chemischen Stabilität ihrer Oxide (unter den gegebenen Bedingungen von Temperatur und pO₂) die Gerüststruktur verlassen und liegt somit als Oxid vor (erkennbar in den Figuren 11a und 11b). Die Metalle, die einen höheren Zersetzungsdruck ihres Oxides aufweisen (z. B. NiO), verbleiben unter diesen Bedingungen als Fe-verarmte metallische Aktivgerüststruktur. Bei der nächsten Reduktion wird die Aktivkomponente wieder vollständig, bzw. größtenteils in das Metall umgewandelt und als solches wieder in die Gerüststruktur in Form einer Legierung bzw. Intermetallischen Phase aufgenommen (Figuren 10 a und 10b).

In den Figuren 10 und 11 bedeuten: 1 = Speichermaterial, 2 = Einbettmasse (schwarz) und innerhalb des Speichermaterials 3 = Aktivkomponente Metall (grau). Die reine metallische Gerüststruktur in den Figuren 11 a und b, die in unterschiedlichen Maßstäben zusammen mit der oberflächennahen Oxidschicht 3 den oxidierten Zustand (geladener Zustand) des Speichermaterials darstellt, ist kaum zu unterscheiden von dem entladenen Zustand, bei dem die reduzierte Aktivkomponente nunmehr vollständig durch Legierungsbildung in der Gerüststruktur eingebunden ist. Die Figur 10 zeigt die Mikrostruktur des Speichermaterials in unterschiedlichen Maßstäben nach 10 Zyklen, wobei nunmehr der letzte Zyklus ein Ladezyklus war, während die Figur 11 die Mirkostruktur nach 11 Zyklen darstellt, wobei der letzte Zyklus ein Entladezyklus war.

Die vorliegende Legierung bzw. die Pulvermischung der einzelnen Elemente könnten mit beliebigen üblichen Methoden bearbeitet werden, um die drei obengenannten Strukturen herzustellen. Wichtig dabei ist, dass das fertige Speichermaterial am Ende des Herstellungsprozesses als metallische Legierung vorliegt, mechanisch stabil ist und eine hohe spezifische Oberfläche aufweist. Als Beispiel wäre darunter ein Speichersystem zu verstehen, welches bei 800 °C betrieben wird, eine Sauerstoffübertragungsrate von ca. 1,25 mg/cm²h aufweist, eine Entladezeit von ca. 2 h, und bei dem das Speichermaterial eine spezifische Oberfläche von mindestens 180 cm²/g aufweist.

Die mechanische Stabilität und die gewünschte spezifische Oberfläche sind dabei abhängig von Systemparametern des Speichersystems (Akkumulator Bauart, bzw. Design), wie beispielsweise die eingestellte Arbeitstemperatur oder die Lade- bzw. Entladegeschwindigkeit, und können in der Regel daher nicht genau spezifiziert werden.

Das fertige erfindungsgemäße Speichermaterial in Form einer Legierung umfasst wenigstens zwei metallische Komponenten. Ein geeignete Kombination aus einer Aktivkomponente und einer metallischen Gerüststruktur wäre beispielsweise die Folgende: Eisen als Aktivkomponente und Nickel als metallische Gerüststruktur. Das Eisen nimmt als Aktivkomponente aktiv an den Redox-Reaktionen während des Lade- und Entladevorgangs teil, und ist verantwortlich für die Energiespeicherung bzw. -freisetzung. Das Nickel als Gerüststruktur nimmt dabei nicht an den Redox-Reaktionen teil, sondern gewährleistet, dass dieser Teil des Speichermaterials immer metallisch bleibt und die Form beibehält.

Um diese Funktionalität zwischen einem Metall als Aktivkomponente und einem Metall als Gerüststruktur sicherzustellen, sollte der Zersetzungsdruck des Gerüststrukturelementoxids immer größer sein als der Sauerstoffpartialdruck der Atmosphäre während des Entladevorgangs, so dass das gewählte Metall für die reaktive Gerüststruktur immer in der metallischen Form vorliegt.

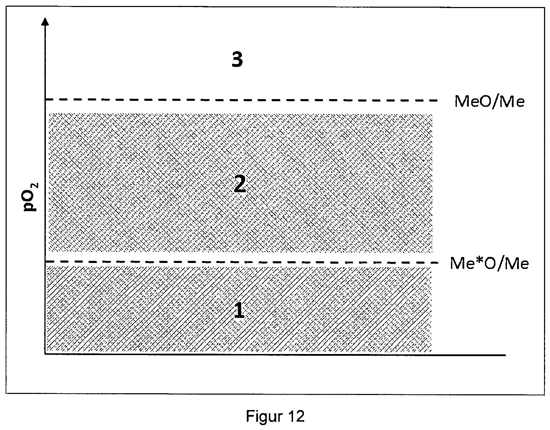

Dies wird auch aus der Figur 12 deutlich, in der schematisch die Stabilitätsbereiche (1, 2, 3) für das Gerüststrukturelement (Me) und die Aktivkomponente (Me*) in Abhängigkeit vom Sauerstoffpartialdruck, p_{O2}, dargestellt sind. Die gestrichelte Linie für MeO/Me gibt den Zersetzungsdruck für das Gerüststrukturelementoxid an, der deutlich höher liegt, als die gestrichelte Linie für Me*O/Me, die den Zersetzungsdruck für das Aktivelementoxid angibt..

Ausgehend von dem vorgenannten Beispiel der Fe-Ni-Legierung, die bei ca. 800 °C eingesetzt werden kann, und einem Sauerstoffpartialdruck während des Entladevorgangs von ca. 10⁻¹⁷ bar, liegt der Zersetzungsdruck von FeO bei 10⁻¹⁹ bar und der Zersetzungsdruck von NiO bei 10⁻¹⁴ bar. In dieser Kombination und bei diesen Randbedingungen fungiert das Fe als Aktivelement und das Ni als Gerüststrukturelement. Auf Grund der vorliegenden Zersetzungsdrücke findet bevorzugt die Ausbildung des Eisenoxids aus Fe gegenüber der Oxidation von Ni zu NiO statt.

Soll für eine andere Anwendung beispielsweise Nickel als Aktivkomponente (Ni*O/Ni) fungieren, muss das dann auszuwählende Gerüstelement einen deutlich höheren Zersetzungsdruck für das Gerüststrukturelementoxid als 10⁻¹⁴ bar aufweisen, beispielsweise Kupfer mit einem Zersetzungsdruck für Kupferoxid als Gerüststruktur von 10⁻¹⁰ bar (siehe auch Tabelle 3).

Das erfindungsgemäße Speichematerial, bzw. die Legierung, kann darüber hinaus auch noch weitere Elemente oder Zusätze enthalten, die beispielsweise die Oxidations- und/oder Reduktionskinetik verbessern oder auch die Beschleunigung der Diffusion der Aktivkomponente in der Gerüststruktur erhöhen. Ein geeignetes Beispiele dafür wäre: Cu > 10 at.-% in Fe-, Ni- und Co-basierten Legierungen. Weiterhin sind geeignete Zusätze für die Verbesserung der Festigkeit (durch z. B. Mo oder W > 5 at.-% in Fe-, Ni- und Co-basierten Legierungen) oder der Verformbarkeit möglich, soweit sie nicht die vorgenannten Funktionsweisen stören. Einen störenden Einfluss haben beispielsweise Al und/oder Si als Zusatz in Konzentrationen über 3 at.-%.

Die nachfolgende Tabelle 3 zeigt einige konkrete Beispiele für mögliche Varianten von erfindungsgemäßen Speichematerialien mit einer metallischen Gerüststruktur, sowie die entsprechenden Bedingungen bezüglich der Temperatur und des Sauerstoffpartialdrucks, bei welchem die Gerüststruktur vorteilhaft ihre "reaktive" Eigenschaft aufweist.

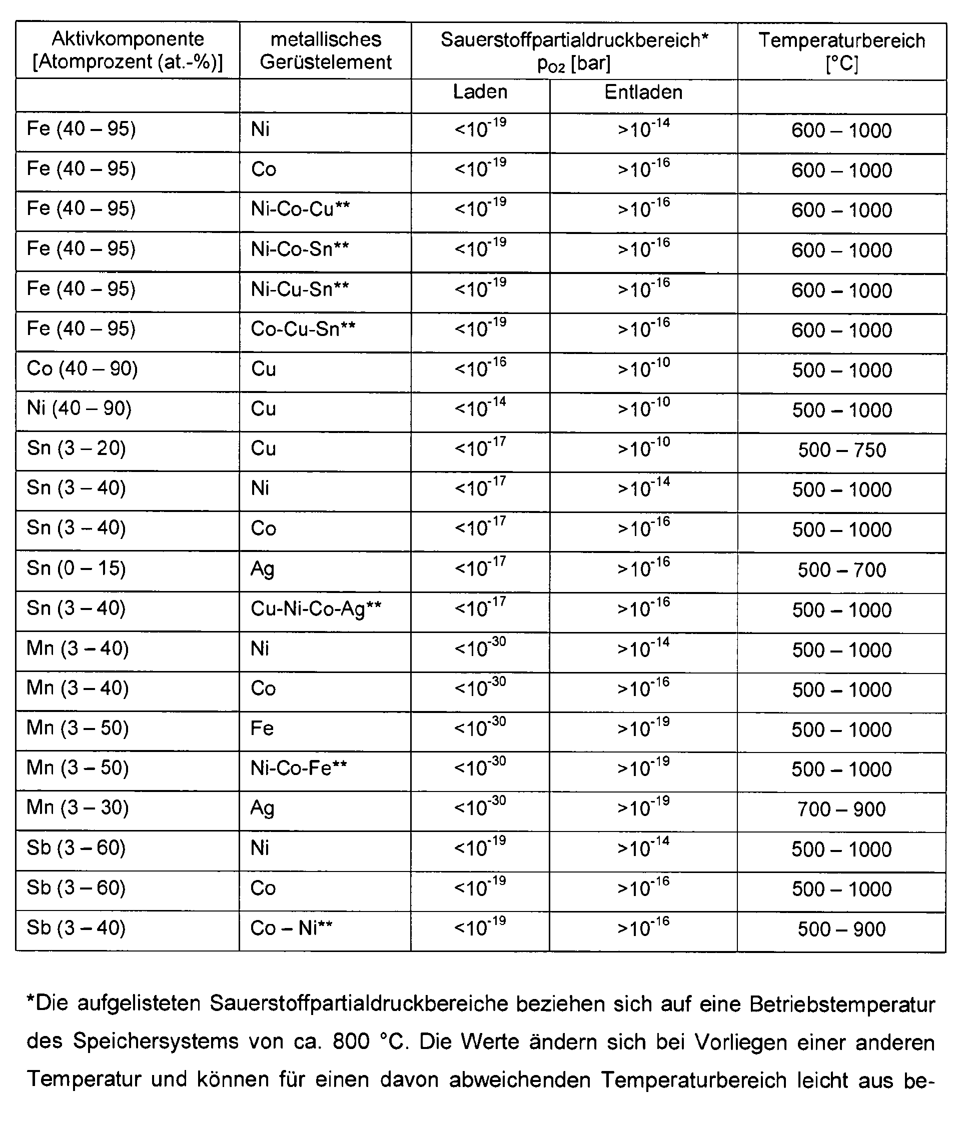

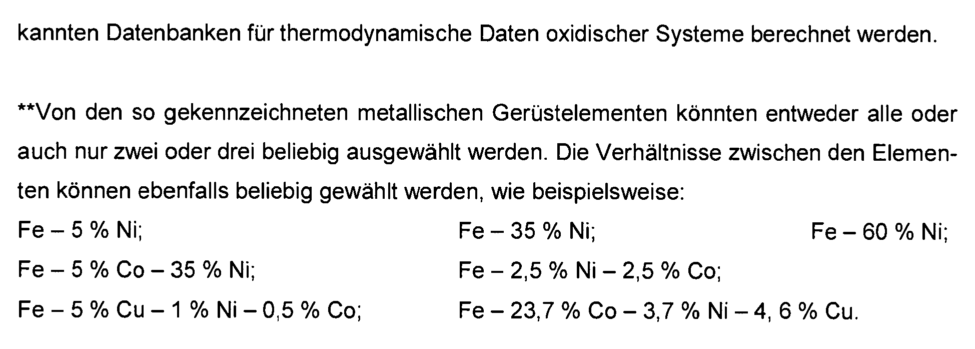

Werden die Betriebsbedingungen, und dabei insbesondere der Sauerstoffpartialdruck und die Temperatur, die Mischungsverhältnisse oder die Mikrostruktur nicht korrekt eingestellt, kann eine Degradation (Materialvergröberung / bzw. -trennung) des Energiespeichermaterials auf Dauer nicht verhindert werden. Die Mikrostruktur kann durch eine entsprechende mechanische und/oder thermische Bearbeitung einstellen.

Im Falle einer reaktiven metallischen Gerüststruktur (z. B. Fe - (5 - 50 %) Ni-Legierung, wie in den Figuren 10 und 11 dargestellt) wird die Aktivkomponente Eisen (Fe) beim Entladeprozess des Speichers ganz oder zum Teil in ein Eisenoxid (FeO und/oder Fe₃O₄) umgewandelt, wobei gleichzeitig eine an Eisen verarmte Gerüststruktur (Fe, Ni - Legierung) zurückbleibt.

Beim Aufladeprozess wird das Eisenoxid wieder reduziert und jetzt als Metall vollständig bzw. zum größten Teil durch Diffusion in die reaktive Gerüststruktur wieder aufgenommen bzw. darin gelöst. Auch durch diese Einbindung (Legierungsbildung) wird eine dauerhafte Vergröberung bzw. Trennung (Migration) effektiv verhindert. Bei dem nächsten Entladenprozess des Speichers kann die Aktivkomponente die reaktive Gerüststruktur wieder verlassen und in ein Oxid umgewandelt werden, wobei sich dies meistens in Form einer Oxidschicht auf der Oberfläche des Speichermaterials ausbildet. Die hier erwähnte Einbindung/Legierungsbildung umfasst insbesondere auch die Ausbildung von intermetallischen Phasen.

## Patentansprüche

1. Speichermaterial zur Speicherung von elektrischer Energie durch Reduktion oder Oxidation einer Aktivkomponente, umfassend eine Aktivkomponente in wenigstens einer reduzierten und/oder oxidierten Form,
***dadurch gekennzeichnet,***
**dass** das Speichermaterial zusätzlich eine reaktive Gerüststruktur aufweist, welche während der Ladung oder der Entladung wenigstens eine Form der Aktivkomponente in Form eines Mischoxids oder einer Legierung chemisch in die Gerüststruktur einzubinden vermag.

2. Speichermaterial nach Anspruch 1, mit einer Aktivkomponente umfassend ein Metall und/oder ein Metalloxid und/oder mehrere Metalloxide in unterschiedlichen Oxidationsstufen.

3. Speichermaterial nach Anspruch 1 bis 2, mit einer Aktivkomponente umfassend Eisen, Kupfer, Mangan, Kobalt, Nickel, Molybdän, Antimon, Zinn, oder Wolfram.

4. Speichermaterial nach Anspruch 1 bis 3, mit einer reaktiven oxidischen Gerüststruktur umfassend Titan, Kalzium, Cer, Magnesium, Strontium, Barium, oder Zink, welche während der Ladung oder der Entladung zusammen mit wenigstens einer oxidierten Form der Aktivkomponente ein stabiles Mischoxid zu bilden vermag, welches in der oxidischen Gerüststruktur eingebunden werden kann.

5. Speichermaterial nach Anspruch 4, bei dem die reaktive oxidische Gerüststruktur im Temperaturbereich zwischen 500 und 1000 °C, insbesondere zwischen 600 und 900 °C, das stabile Mischoxid auszubilden vermag.

6. Speichermaterial nach einem der vorhergehenden Ansprüche 4 bis 5, bei dem die Aktivkomponente Eisen umfasst und die reaktive Gerüststruktur wenigstens ein Titan-, Kalzium-, Cer-, Magnesium-, Silizium- oder Zink-basiertes Mischoxid mit dem Eisen auszubilden vermag.

7. Speichermaterial nach einem der vorhergehenden Ansprüche 4 bis 5, bei dem die Aktivkomponente Kupfer umfasst und die reaktive oxidische Gerüststruktur wenigstens ein Titan-, Kalzium-, Cer-, Magnesium-, Silizium- oder Zink-basiertes Mischoxid mit dem Kupfer auszubilden vermag.

8. Speichermaterial nach einem der vorhergehenden Ansprüche 4 bis 5, bei dem die Aktivkomponente Mangan umfasst und die reaktive oxidische Gerüststruktur wenigstens ein Titan-, Kalzium-, Cer-, Magnesium-, Strontium-, Barium-, oder Zink-basiertes Mischoxid mit dem Mangan auszubilden vermag.

9. Speichermaterial nach einem der vorhergehenden Ansprüche 4 bis 5, bei dem die Aktivkomponente Kobalt umfasst und die reaktive oxidische Gerüststruktur wenigstens ein Titan-, Kalzium-, Cer-, Magnesium-, Strontium-, Barium-, oder Zink-basiertes Mischoxid mit dem Kobalt auszubilden vermag.

10. Speichermaterial nach einem der vorhergehenden Ansprüche 4 bis 5, bei dem die Aktivkomponente Nickel umfasst und die reaktive oxidische Gerüststruktur wenigstens ein Titan-, Kalzium-, Cer-, Magnesium-, Strontium-, Barium-, oder Zink-basiertes Mischoxid mit dem Nickel auszubilden vermag.

11. Speichermaterial nach einem der vorhergehenden Ansprüche 4 bis 5, bei dem die Aktivkomponente Molybdän umfasst und die reaktive oxidische Gerüststruktur wenigstens ein Titan-, Kalzium-, Cer-, Magnesium-, Strontium-, Barium-, oder Zink-basiertes Mischoxid mit dem Molybdän auszubilden vermag.

12. Speichermaterial nach einem der vorhergehenden Ansprüche 4 bis 5, bei dem die Aktivkomponente Wolfram umfasst und die reaktive oxidische Gerüststruktur wenigstens ein Titan-, Kalzium-, Cer-, Magnesium-, Strontium-, Barium-, oder Zink-basiertes Mischoxid mit dem Wolfram auszubilden vermag.

13. Speichermaterial nach einem der vorhergehenden Ansprüche, welches wenigstens eins der folgende Mischoxidpaare aufweist:
| | | |
|---|---|---|
| TiFe₂O₅/ TiFe₂O₄, | 2 CaFe₂O₄ / Ca₂Fe₂O₅ + 2 Fe, | CeFeO₃/ CeO₂ + Fe, |
| TiFeO₃/ TiO₂ + Fe, | 2 CaFe₅O₇/ Ca₂Fe₂O₅ + 8 Fe, | SiFe₂O₄/ SiO₂ + Fe, |
| TiFe₂O₄/ TiFeO₃ + Fe, | MgFe₂O₄/ (Mg, Fe)O + Fe, | ZnFe₂O₄ (Zn, Fe)O + Fe, |
| Fe₂CuO₄ / 2 FeO + Cu, | Fe₂CoO₄ / 2 FeO + Co, | Fe₂NiO₄ / 2 FeO * Ni. |

14. Speichermaterial nach Anspruch 1 bis 3, mit einer reaktiven metallischen Gerüststruktur umfassend Nickel, Kobalt, Kupfer, Eisen oder Silber, welche während der Ladung oder der Entladung zusammen mit wenigstens einer reduzierten Form der Aktivkomponente eine stabile Legierung auszubilden vermag, welche in der reaktiven metallischen Gerüststruktur eingebunden werden kann.

15. Speichermaterial nach Anspruch 14, bei dem die reaktive metallische Gerüststruktur im Temperaturbereich zwischen 500 und 1000 °C, insbesondere zwischen 600 und 900 °C, die metallische Legierung auszubilden vermag.

16. Speichereinrichtung zur Speicherung von elektrischer Energie mit wenigstens einem Modul, wobei das Modul eine erste Elektrode (5) mit einem daran angrenzenden Brennstoffraum (6), eine zweite Elektrode (3) mit einem daran angrenzenden Luftraum (2), sowie einen zwischen den Elektroden (3, 5) angeordneten Sauerstoffionen leitenden Festelektrolyten (4) aufweist, und wobei die zweite Elektrode (3) porös, Sauerstoffionen generierend und Sauerstoff ionen leitend ausgestaltet ist,
***dadurch gekennzeichnet.***
**dass** der Brennstoffraum (6) ein Speichermaterial (7) gemäß einem der Ansprüche 1 bis 15 aufweist.

## Claims

1. Storage material for storing electrical energy through reducing or oxidising an active component, comprising an active component in at least one reduced and/or oxidised form,
***characterised in that***
the storage material also has a reactive framework structure, which during charging or discharging is able to integrate at least one form of the active component in the form of a mixed oxide or an alloy chemically into the framework structure.

2. Storage material according to claim 1 with an active component comprising a metal and/or a metal oxide and/or several metal oxides in different stages of oxidation.

3. Storage material according to claim 1 to 2 with an active component comprising iron, copper, manganese, cobalt, nickel, molybdenum, antimony, tin or tungsten.

4. Storage material according to claim 1 to 3 with a reactive oxidic framework structure comprising titanium, calcium, cerium, magnesium, strontium, barium or zinc, which during charging or discharging together with at least one oxidised form of the active component is able to form a stable mixed oxide, which may be integrated into the oxidic framework structure.

5. Storage material according to claim 4, in which the reactive oxidic framework structure is able to form the stable mixed oxide in the temperature range between 500 and 1000° C, particularly between 600 and 900° C.

6. Storage material according to one of previous claims 4 to 5, in which the active component comprises iron and the reactive framework structure is able to form at least one titanium, calcium, cerium, magnesium, silicon or zinc-based mixed oxide with the iron.

7. Storage material according to one of previous claims 4 to 5, in which the active component comprises copper and the reactive oxidic framework structure is able to form at least one titanium, calcium, cerium, magnesium, silicon or zinc-based mixed oxide with the copper.

8. Storage material according to one of previous claims 4 to 5, in which the active component comprises manganese and the reactive oxidic framework structure is able to form at least one titanium, calcium, cerium, magnesium, strontium, barium or zinc-based mixed oxide with the manganese.

9. Storage material according to one of previous claims 4 to 5, in which the active component comprises cobalt and the reactive oxidic framework structure is able to form at least one titanium, calcium, cerium, magnesium, strontium, barium or zinc-based mixed oxide with the cobalt.

10. Storage material according to one of previous claims 4 to 5, in which the active component comprises nickel and the reactive oxidic framework structure is able to form at least one titanium, calcium, cerium, magnesium, strontium, barium or zinc-based mixed oxide with the nickel.

11. Storage material according to one of previous claims 4 to 5, in which the active component comprises molybdenum and the reactive oxidic framework structure is able to form at least one titanium, calcium, cerium, magnesium, strontium, barium or zinc-based mixed oxide with the molybdenum.

12. Storage material according to one of previous claims 4 to 5, in which the active component comprises tungsten and the reactive oxidic framework structure is able to form at least one titanium, calcium, cerium, magnesium, strontium, barium or zinc-based mixed oxide with the tungsten.

13. Storage material according to one of the previous claims, which has at least one of the following mixed oxide pairs:
| | | |
|---|---|---|
| TiFe₂O₅ / TiFe₂O₄, | 2 CaFe₂O₄ / Ca₂Fe₂O₅ + 2 Fe, | CeFeO₃ / CeO₂ + Fe, |
| TiFeO₃ / TiO₂ + Fe, | 2 CaFe₅O₇ / Ca₂Fe₂O₅ + 8 Fe, | SiFe₂O₄ / SiO₂ + Fe, |
| TiFe₂O₄ / TiFeO₃ + Fe, | MgFe₂O₄ / (Mg, Fe)O + Fe, | ZnFe₂O₄ / (Zn, Fe)O + Fe, |
| Fe₂CuO₄ / 2 FeO + Cu, | Fe₂CoO₄ / 2 FeO + Co, | Fe₂NiO₄ / 2 FeO * Ni. |

14. Storage material according to claim 1 to 3 with a reactive metallic framework structure comprising nickel, cobalt, copper, iron or silver, which during charging or discharging together with at least one reduced form of the active component is able to form a stable alloy, which may be integrated into the reactive metallic framework structure.

15. Storage material according to claim 14, in which the reactive metallic framework structure is able to form the metallic alloy in the temperature range between 500 and 1000° C, particularly between 600 and 900° C.

16. Storage device for storing electrical energy with at least one module, in which the module has a first electrode (5) with a fuel space (6) adjacent to it and a second electrode (3) with an air space (2) adjacent to it as well as a solid electrolyte (4) conducting oxygen ions arranged between the electrodes (3, 5) and in which the second electrode (3) is made porous, generating oxygen ions and conducting oxygen ions,
***characterised in that***
the fuel space (6) has a storage material (7) according to one of claims 1 to 15.

## Revendications

1. Matériau accumulateur destiné à l'accumulation d'énergie électrique par réduction ou oxydation d'un composant actif, comprenant un composant actif sous au moins une forme réduite et/ou oxydée,
**caractérisé en ce**
**que** le matériau accumulateur présente en outre une structure de squelette réactive qui, pendant le chargement ou le déchargement, est capable d'intégrer chimiquement au moins une forme du composant actif dans la structure de squelette sous la forme d'un oxyde mixte ou d'un alliage.

2. Matériau accumulateur selon la revendication 1, avec un composant actif comprenant un métal et/ou un oxyde métallique et/ou plusieurs oxydes métalliques à différents degrés d'oxydation.

3. Matériau accumulateur selon la revendication 1 à 2, avec un composant actif comprenant le fer, le cuivre, le manganèse, le cobalt, le nickel, le molybdène, l'antimoine, l'étain ou le wolfram.

4. Matériau accumulateur selon la revendication 1 à 3, avec une structure de squelette oxydique réactive comprenant le titane, le calcium, le cérium, le magnésium, le strontium, le baryum ou le zinc, qui, pendant le chargement ou le déchargement, est capable, conjointement avec au moins une forme oxydée du composant actif, de former un oxyde mixte stable qui peut être intégré dans la structure de squelette oxydique.

5. Matériau accumulateur selon la revendication 4, dans lequel la structure de squelette oxydique réactive est capable de former l'oxyde mixte stable dans la plage de température comprise entre 500 et 1000 °C, en particulier entre 600 et 900 °C.

6. Matériau accumulateur selon l'une des revendications précédentes 4 à 5, dans lequel le composant actif comprend du fer et la structure de squelette réactive est capable de former avec le fer au moins un oxyde mixte à base de titane, de calcium, de cérium, de magnésium, de silicium ou de zinc.

7. Matériau accumulateur selon l'une des revendications précédentes 4 à 5, dans lequel le composant actif comprend du cuivre et la structure de squelette oxydique réactive est capable de former avec le cuivre au moins un oxyde mixte à base de titane, de calcium, de cérium, de magnésium, de silicium ou de zinc.

8. Matériau accumulateur selon l'une des revendications précédentes 4 à 5, dans lequel le composant actif comprend du manganèse et la structure de squelette oxydique réactive est capable de former avec le manganèse au moins un oxyde mixte à base de titane, de calcium, de cérium, de magnésium, de strontium, de baryum, ou de zinc.

9. Matériau accumulateur selon l'une des revendications précédentes 4 à 5, dans lequel le composant actif comprend du cobalt et la structure de squelette oxydique réactive est capable de former avec le cobalt au moins un oxyde mixte à base de titane, de calcium, de cérium, de magnésium, de strontium, de baryum, ou de zinc.

10. Matériau accumulateur selon l'une des revendications précédentes 4 à 5, dans lequel le composant actif comprend du nickel et la structure de squelette oxydique réactive est capable de former avec le nickel au moins un oxyde mixte à base de titane, de calcium, de cérium, de magnésium, de strontium, de baryum, ou de zinc.

11. Matériau accumulateur selon l'une des revendications précédentes 4 à 5, dans lequel le composant actif comprend du molybdène et la structure de squelette oxydique réactive est capable de former avec le molybdène au moins un oxyde mixte à base de titane, de calcium, de cérium, de magnésium, de strontium, de baryum, ou de zinc.

12. Matériau accumulateur selon l'une des revendications précédentes 4 à 5, dans lequel le composant actif comprend du wolfram et la structure de squelette oxydique réactive est capable de former avec le wolfram au moins un oxyde mixte à base de titane, de calcium, de cérium, de magnésium, de strontium, de baryum, ou de zinc.

13. Matériau accumulateur selon l'une des revendications précédentes, qui présente au moins une des paires d'oxydes mixtes suivantes :
| | | |
|---|---|---|
| TiFe₂O₅/TiFe₂O₄, | 2 CaFe₂O₄/Ca₂Fe₂O₅ + 2 Fe, | CeFeO₃/CeO₂ + Fe, |
| TiFeO₃/TiO₂ + Fe, | 2 CaFe₅O₇/Ca₂Fe₂O₅ + 8 Fe, | SiFe₂O₄/SiO₂ + Fe, |
| TiFe₂O₄/TiFeO3 + Fe, | MgFe₂O₄/(Mg, Fe)O + Fe, | ZnFe₂O₄/ (Zn, Fe)O + Fe, |
| Fe₂CuO₄/2 FeO + Cu, | Fe₂CoO₄/2 FeO + Co, | Fe₂NiO₄/2 FeO * Ni. |

14. Matériau accumulateur selon la revendication 1 à 3, avec une structure de squelette métallique réactive comprenant du nickel, du cobalt, du cuivre, du fer ou de l'argent, qui, pendant le chargement ou le déchargement, est capable, conjointement avec au moins une forme réduite du composant actif, de former un alliage stable qui peut être intégré dans la structure de squelette métallique réactive.

15. Matériau accumulateur selon la revendication 14, dans lequel la structure de squelette métallique réactive est capable de former l'alliage métallique dans la plage de température comprise entre 500 et 1000 °C, en particulier entre 600 et 900 °C.

16. Dispositif accumulateur destiné à l'accumulation d'énergie électrique avec au moins un module, dans lequel le module présente une première électrode (5) avec un espace de combustible (6) adjacent à celle-ci, une seconde électrode (3) avec un espace d'air (2) adjacent à celle-ci, ainsi qu'un électrolyte solide (4) conducteur d'ions d'oxygène disposé entre les électrodes (3, 5), et dans lequel la seconde électrode (3) est conçue poreuse, génératrice d'ions d'oxygène et conductrice d'ions d'oxygène,
**caractérisé en ce**
**que** l'espace de combustible (6) présente un matériau accumulateur (7) selon l'une des revendications 1 à 15.
